# EUROPEAN PATENT SPECIFICATION

(11) **EP 2 530 958 B1**
(45) Date of publication and mention of the grant of the patent: **04.04.2018**
(21) Application number: 11780060.7
(22) Date of filing: 25.01.2011
(51) Int. Cl.: H04W 4/00, H04L 12/751, H04W 84/18

(54) **M2M PLATFORM COMMUNICATION SYSTEM AND METHOD**
KOMMUNIKATIONSSYSTEM UND -VERFAHREN FÜR EINE MASCHINE-ZU-MASCHINE-PLATTFORM
SYSTÈME ET PROCÉDÉ DE COMMUNICATION PAR PLATE-FORME M2M

(30) Priority: 14.05.2010 CN 201010175265
(43) Date of publication of application: 05.12.2012
(73) Proprietor: ZTE Corporation, Shenzhen, Guangdong 518057 (CN)
(72) Inventor: FENG, Yuxiang, Shenzhen Guangdong 518057 (CN)
(74) Representative: Lavoix
(86) International application number: PCT/CN2011/070568
(87) International publication number: WO 2011/140838

(56) References cited:
- WO-A1-2011/127320
- CN-A- 1 480 864
- JP-A- 2006 166 125
- "Machine- to- Machine communications (M2M); Functional architecture", ETSI DRAFT; DRAFT_ARCHITECTURE_TS POST M2M#8 REV MARKS, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.1.3, 23 February 2010 (2010-02-23), pages 1-53, XP014050802, [retrieved on 2010-02-23]
- 3GPP: "System Improvements for Machine-Type Communications;(Release 10) TR 23.888 v0.3.2", , vol. SA WG2 22 March 2010 (2010-03-22), pages 1-33, XP002717968, 3rd Generation Partnership Project (3GPP), Mobile Competence Centre ; 650, route des Lucioles ; F-06921 Sophia-Antipolis Cedex ; France Retrieved from the Internet: URL:http://www.3gpp.org/DynaReport/23888.h tm [retrieved on 2013-12-16]

## Description

### TECHNICAL FIELD

The disclosure relates to Machine-to-Machine/Man (M2M) technology in the field of computer communications, and in particular to an M2M platform communication system and method.

### BACKGROUND

The M2M is a networked application and service, the core of which is an intelligent interaction between machine terminals. The M2M provides customers with comprehensive informationized solutions by embedding a wireless communication module inside a machine and by using an access method such as wireless communication, so as to meet the informationization requirements of the customers for monitoring, commanding and dispatching, data acquisition, measurement, or the like.

An M2M terminal meets a certain protocol, for example, an M2M mobile terminal is based on a Wireless Machine-to-Machine Protocol (WMMP), and an M2M telecommunication terminal supports an M2M Device Management Protocol (MDMP); and the M2M terminal has a certain function, such as receiving an activation instruction from a remote M2M platform, local fault warning, data communication, remote upgrade, data statistics and an end-to-end communication interaction function.

An M2M platform is a system which provides unified M2M terminal access management, terminal device authentication and detection control for M2M clients, and can forward corresponding service data. The M2M application service platform is an application system which provides various M2M application services for M2M clients to realize logic processing of services in particular industries.

The Internet of things is similar to the Internet, both interconnecting numerous devices; however, the Internet of things has a greater goal in complete interconnection between all the terminals.

The Internet of things in the early stage is an M2M system; regarding how to design an M2M system architecture, an operator usually hopes the Internet of things has a core control node. Therefore, one M2M platform is required to be realized in all existing M2M protocols, and all of the M2M applications and bottom terminals are to be registered on this platform. The M2M applications communicate with the bottom terminals, any communication between the bottom terminals is forwarded through the M2M platform.

But the Internet of things has a particularity: the amount of communication data is very vast, and the number of bottom devices is also tremendous. If a high-performance and extensible M2M system architecture is not designed, the need of development in the Internet of things cannot be met according to the existing protocols; if there is no communication system similar to the Internet, which can be self-maintained and conveniently extended, the development of Internet of things will encounter bottlenecks.

However, the current M2M communication system does not take M2M platform interconnection into account (the implementation of M2M platform interconnection among multiple regions is an inevitable trend in the future), or takes M2M platform interconnection into account, but the M2M platform can be divided into two levels at most: one national-level M2M platform and a plurality of local M2M platforms. The local M2M platforms can be directly communicated with the national-level M2M platform; if the local M2M platforms send and receive messages to/from each other, they need the national-level M2M platform to relay the messages. When the Internet of things develops to a certain level, this hierarchical scheme may have bad network robustness and extensibility after the traffic becomes massive.

Additionally, it is stipulated in the existing related M2M protocols that both M2M applications and bottom terminals have interfaces to realize direct communication, not through the M2M platform; however, the use of the interfaces is only limited to transparent transmission of service information, and a large number of communication services are still forwarded through the M2M platform, therefore, it is very necessary to enhance the robustness and extensibility of the M2M platform.

XP014050802, "Machine-to-Machine communications (M2M); Functional architecture", ETSI DRAFT; DRAFT_ARCHITECTURE_TS POST M2M#8 REV MARKS. EUROPEAN TELECOMMUNICATIONS STANDARDS INSTITUTE (ETSI), 650, ROUTE DES LUCIOLES; F-06921 SOPHIA-ANTIPOL: FISR ANCE. no. VO.1.3, 23 February 2010, pages 1 -53, discloses a M2M architecture, wherein the M2M Device connects to the Network and Application Domain via an M2M Gateway, the M2M Gateway performs procedures such as registration, management, of the M2M devices connected to it, and also executes applications, on behalf of the M2M Network and Application Domain.

XP0027179638, 3GPP: "System Improvements for Machine-Type Communications; (Release 10) TR 23.888 v0.3.2", vol. SA WG2 22 March 2010, pages 1-33, 3rd Generation Partnership |Project (3GPP), Mobile Competence Centre; 650, route des Lucioles; F-06921 Sophia-Antipolis Cedex; France, discloses architectural enhancements to support a large number of Machine-Type Communication (MTC) devices in the net work and to fulfill MTC service requirements.

WO2 011/12732A01 (QUALCOMN INC [US]; CHERIAN GEORGE [U S]; TINNAKORNSRISUPHAP PEERAPOL [U)13 October 2011(2011-10-13); &EP2 556 717A1 (QUALCOMN INC [US] 13 February 2013 (2013-02-13), discloses an apparatus and method for establishing a connection including 300 reserving a common connection for use by more than one access terminal (AT); associating the common connection with a network identifier corresponding to the AT; deleting a network identifier-related context while maintaining the network identifier; and transmitting a message, based on a call to the AT, via the common connection and based on the network identifier, wherein a specific connection for carrying the call is based on a response to the message.

### SUMMARY

In view of these, the disclosure mainly aims to provide an M2M platform communication system and method to improve the extensibility of the M2M platform communication system, and enhance the efficiency and robustness of the bottom communication. The invention is defined by the independent claims.

For achieving above aim, the following technical schemes are provided.

In one aspect, an M2M platform communication system is provided, which comprises a plurality of M2M platforms, at which bottom terminals are registered, wherein each of the M2M platforms includes an upper application logic processing module and a bottom communication module, wherein,
the upper application logic processing module is configured to execute application logic processing of the M2M platform to obtain a bottom message which includes a global network unique identifier of a target bottom terminal; and
the bottom communication module is configured to route the bottom message to the target bottom terminal according to the global network unique identifier in the bottom message;
wherein the upper application logic processing module is further configured to process information reported by a bottom terminal, request configuration of the bottom terminal, read the configuration of the bottom terminal, and send a control command to the bottom terminal;
the bottom communication module is further configured to receive the bottom message from other M2M platforms, upload the message to the upper application logic processing module of its own M2M platform, receive the message from the upper application logic processing module of its own M2M platform, and forward the message to other M2M platforms.

The each of the M2M platforms, when a bottom terminal requests to register, may allocate a global network unique identifier to the bottom terminal;
the global network unique identifier may include an identifier of an M2M platform on which the bottom terminal is registered;
accordingly, the bottom communication module of the each of the M2M platforms may be further configured to extract the identifier of the M2M platform on which the bottom terminal is registered from the global network unique identifier, and match the extracted identifier of the M2M platform with an identifier of an M2M platform to which the bottom communication module itself belongs; when the match fails, look up a routing and forwarding table of the bottom communication module itself according to the extracted identifier of the M2M platform, and forward the bottom message according to a forwarding path searched out.

The global network unique identifier may further include a bottom terminal type code, an identifier of a device group to which the bottom terminal registered on the M2M platform belongs, registration time and a serial number;
accordingly, the bottom communication module of the each of the M2M platforms may be further configured to, when the match succeeds, extract the bottom terminal type code, the identifier of the device group to which the bottom terminal registered on the M2M platform belongs, the registration time and the serial number from the global network unique identifier; when both the registration time and the serial number extracted are default values, send the bottom message to all bottom terminals in the group corresponding to the identifier of the device group; when the registration time and/or the serial number extracted are/ is not default values, match the registration time and/or the serial number extracted with registration information maintained by the M2M platform to which the bottom communication module itself belongs, and send the bottom message to a bottom terminal matching with the registration information.

The system may further include: an operator management and configuration platform, which is connected to the each of the M2M platforms, and configured to configure and maintain a routing table of the bottom communication module of the each of the M2M platforms.

The bottom communication module of the each of the M2M platforms may be further configured to realize maintenance of its own routing table through routing information interaction with an adjacent bottom communication module.

In another aspect, an M2M platform communication method is provided, which includes:
executing, by an upper application logic processing module, application logic processing of an M2M platform to obtain a bottom message which includes a global network unique identifier of a target bottom terminal; and
routing, by a bottom communication module, the bottom message to the target bottom terminal according to the global network unique identifier in the bottom message;
wherein the method further includes:
   processing, by the upper application logic processing module, information reported by a bottom terminal;
   requesting, by the upper application logic processing module, configuration of the bottom terminal;
   reading, by the upper application logic processing module, the configuration of the bottom terminal;
   sending, by the upper application logic processing module, a control command to the bottom terminal;
   receiving, by the bottom communication module, the bottom message from other M2M platforms;
   uploading, by the bottom communication module, the message to the upper application logic processing module of its own M2M platform;
   receiving, by the bottom communication module, the message from the upper application logic processing module of its own M2M platform; and
   forwarding, by the bottom communication module, the message to other M2M platforms.

The method may further include: allocating, by the M2M platform, a global network unique identifier to a bottom terminal when the bottom terminal requests to register;
wherein the global network unique identifier includes an identifier of the M2M platform on which the bottom terminal is registered;
accordingly, the method may further include: extracting, by the bottom communication module, the identifier of the M2M platform on which the bottom terminal is registered from the global network unique identifier, and matching, by the bottom communication module, the extracted identifier of the M2M platform with an identifier of an M2M platform to which the bottom communication module itself belongs; when the match fails, looking up, by the bottom communication module, a routing and forwarding table of the bottom communication module itself according to the extracted identifier of the M2M platform, and forwarding, by the bottom communication module, the bottom message according to a forwarding path searched out.

The global network unique identifier may further include a bottom terminal type code, an identifier of a device group to which the bottom terminal registered on the M2M platform belongs, registration time and a serial number;
accordingly, the method may further include: when the match succeeds, extracting, by the bottom communication module, the bottom terminal type code, the identifier of the device group to which the bottom terminal registered on the M2M platform belongs, the registration time and the serial number from the global network unique identifier; when both the registration time and the serial number extracted are default values, sending, by the bottom communication module, the bottom message to all bottom terminals in the group corresponding to the identifier of the device group; when the registration time and/or the serial number extracted are/is not default values, matching, by the bottom communication module, the registration time and/or the serial number extracted with registration information maintained by the M2M platform to which the bottom communication module itself belongs and sending, by the bottom communication module, the bottom message to a bottom terminal matching with the registration information.

The method may further include: configuring and maintaining, by an operator management and configuration platform, a routing table of the bottom communication module of each M2M platform.

The method may further include: realizing, by the bottom communication module of each M2M platform, maintenance of its own routing table through routing information interaction with an adjacent bottom communication module.

In the M2M platform communication system and method provided by the disclosure, an upper application logic processing module executes application logic processing of an M2M platform to obtain a bottom message which includes a global network unique identifier of a target bottom terminal; and a bottom communication module routes the bottom message to the target bottom terminal according to the global network unique identifier in the bottom message. The routing of the bottom message includes cross-M2M-platform routing and non-cross-M2M-platform routing. By the system and the method provided by the disclosure, the extensibility of the M2M platform communication system is improved, and the efficiency and robustness of the bottom communication are enhanced.

### BRIEF DESCRIPTION OF THE DRAWINGS

Fig. 1 is a structural diagram I of an M2M platform communication system in an embodiment of the disclosure;
Fig. 2 is a structural diagram II of the M2M platform communication system in an embodiment of the disclosure; and
Fig. 3 is a diagram of an internal structure of an M2M platform in an embodiment of the disclosure.

### DETAILED DESCRIPTION

The technical schemes of the disclosure are described below with reference to the accompanying drawings and specific embodiments in detail.

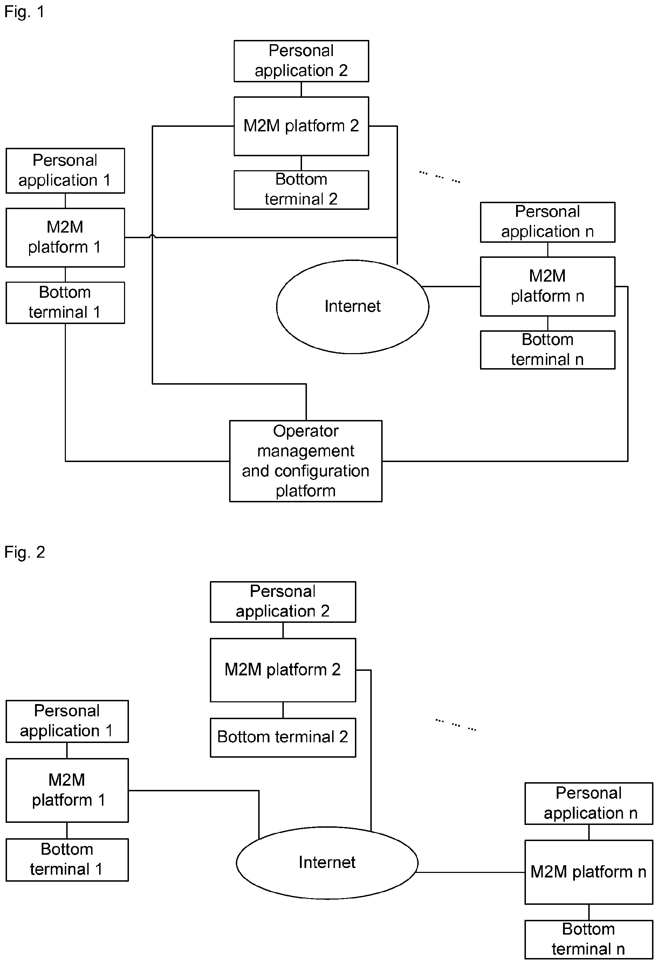

In order to increase the extensibility of the M2M platform communication system, the architecture of the M2M platform communication system is improved, and the improved architecture of the M2M platform communication system is as shown in Fig. 1 and Fig. 2; the system includes a plurality of M2M platforms, on which bottom terminals are registered, and the M2M platforms are intercommunicated with one another through Internet.

For each bottom terminal, an M2M platform on which a bottom device requests to register allocates a global network unique identifier to the bottom device, the global network unique identifier including enough information required for routing and service processing. For the routing, the global network unique identifier is required to include the identifier of the M2M platform; for the service processing, the global network unique identifier is required to include information of the bottom terminal itself, such as type information, group information or other information. Besides the type and group information, in order to continue uniquely determining and distinguishing a certain terminal in a certain group at the bottom layer, other information, such as a time label, a serial number or the like, can also be added. That is to say, when a bottom terminal is registered on an M2M platform, the M2M platform dynamically allocates a global network unique identifier to the bottom terminal. The global network unique identifier may include: the identifier of the M2M platform on which the bottom terminal is registered, a bottom terminal type code, an identifier of a device group to which the bottom terminal registered on the M2M platform belongs, registration time and a serial number of the bottom terminal, and so on.

It should be noted that, when a bottom terminal is registered on an M2M platform, the M2M platform further needs to register with a corresponding M2M application according to a subscription relationship, stored by itself, between the bottom terminal and a service. When the M2M application is an application registered on other M2M platform, the M2M platform checks the routing table of its own, forwards a massage through a plurality of M2M platforms and registers with the M2M application.

Allocation of identifiers to bottom terminals in the above way can ensure that all of the bottom terminals have unique identifiers in the whole M2M platform communication system; furthermore, since an identifier itself includes large amounts of routing and type information or other information, a higher communication efficiency can be ensured to be reached when an M2M application communicates with a bottom terminal or bottom terminals communicate with one another.
when there is enough routing information, in order to enable the system to send and receive a bottom message more efficiently, robustly and flexibly, the disclosure also realizes an M2M architecture in the following manner.

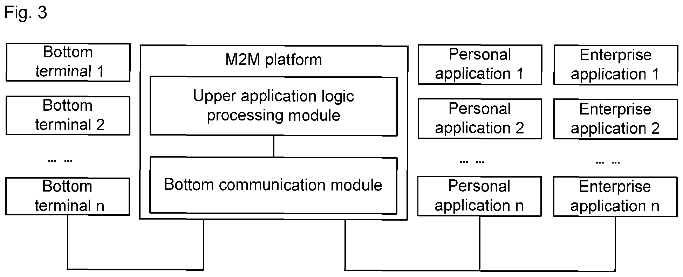

In terms of function, an M2M platform is divided hierarchically, as shown in Fig. 3, into an upper application logic processing module and a bottom communication module. The upper application logic processing module is responsible for application logic processing of the M2M platform, including: processing information reported by a bottom terminal, requesting configuration of the bottom terminal, reading the configuration of the bottom terminal, sending a control command to the bottom terminal, and so on. The bottom communication module is responsible for forwarding a bottom message obtained by the upper layer through the logic processing, including: receiving the bottom message from other M2M platforms and uploading the message to the upper application logic processing module of its own M2M platform, as well as receiving the message from the upper application logic processing module of its own M2M platform and forwarding the message to other M2M platforms. The unique parameter, which is required to be transferred from the bottom layer of communication to the upper layer of the platform, or transferred from the upper layer of the platform to the bottom layer of communication is the global network unique identifier of the bottom terminal itself.

The hierarchical division of the function of the M2M platform aims to enable complete independence of the function of bottom communication, encapsulate the communication capability, thereby collectively providing a message forwarding service for the upper layer of the M2M platform. In this way, the upper layer of the M2M platform only needs to focus on service logic processing. When needing to send and receive a message, the upper layer of the M2M platform only needs to be registered on a certain bottom communication module. Since the communication function is independently realized by a separate module, as compared to the case of no independence, the complexity of code implementation of the M2M platform is greatly reduced, the reliability of the procedure and the performance are greatly improved. Since the bottom communication module is specifically responsible for bottom communication and for shielding the function of the upper layer, in this way, the bottom communication can be realized by one process, and the efficiency and robustness of the system can be improved significantly.

Furthermore, when the bottom communication modules of the M2M platforms are interconnected, one of the following ways can be adopted:
I. Some of operators participate in management, the routing table of the bottom communication module of each M2M platform is configured and maintained by an operator management and configuration platform which is connected to each M2M platform; that is, all of the bottom communication modules adopt TCP/IP communication, and monitor at a certain port to wait a connection request from other bottom communication modules, and the operator knows information of all the bottom communication modules, and enables two specified bottom communication modules to interconnect with each other by configuration performed by the operator management and configuration platform; in this way, the operator can enable any two of all bottom communication modules to be directly connected with each other, or enable some of bottom communication modules to be directly connected with one another; the routing tables of all the bottom communication modules are maintained by the operator management and configuration platform;
II. The bottom communication modules are in a self-maintained state, and the bottom communication modules of all M2M platform interact routing information with an adjacent bottom communication module to realize the maintenance of their respective routing tables. That is, all of the bottom communication modules adopt TCP/IP communication, and monitor at a certain port to wait a connection request from other bottom communication modules; and each bottom communication module itself stores a routing and forwarding table about all the bottom communication modules, which includes records of routing policies of all bottom communication modules known by the bottom communication module itself, each record including a unique identifier of a target bottom communication module, a link identifier of next hop, and so on.

With respect to the second way, all of the bottom communication modules possess a message forwarding routing table about M2M platforms of the whole network, and the routing table can be periodically updated. When a new bottom communication module is added, the platform communication modules of the whole network can perceive it and update their respective routing tables. That is, each bottom communication module periodically sends its own routing table to a bottom communication module directly adjacent thereto, and after receiving the routing table of the adjacent bottom communication module, compares it with its own routing table, and if the comparison shows that a new bottom communication module is added, updates its own routing table. For example, when a new bottom communication module A is connected to the system, it is first connected to a module B in the system, the module B sends its own routing table to the module A, and adds the module A to its own routing table, and the module B then sends a module newly-added message to a module directly adjacent to itself (except the module A); the bottom communication module receiving the module newly-added message checks whether its own routing table has a record about the newly added module or not, if there is no such record, adds record information included in the newly added message to its own routing table, and sends the module newly-added message to other module directly adjacent to itself (except the module B sending the newly added message), and if there is such record, discards the module newly-added message without processing.

When a bottom communication module is deleted or fails, the platform communication modules of the whole network can perceive it and update their respective routing tables. That is, there is a heartbeat message between adjacent bottom communication modules; when a certain bottom communication module A fails, heartbeat message timeout or chain breaking duration timeout occurs between the bottom communication module A and its adjacent bottom communication module B. The module B first updates its own routing table, deletes all routing records of the module A, and sends a module fault message to a bottom communication module directly adjacent to itself (except the module A); the bottom communication module receiving the module fault message checks whether its own routing table has a record about the fault module or not, if there exists the record about the fault module, then deletes record information included in the module fault message from its own record table and sends the module fault message to other modules directly adjacent to itself (except the module B sending the module fault message), and if there is no record about the fault module, then discards the module fault message without processing.

Additionally, when a bottom message is forwarded between bottom communication modules, the bottom communication modules only need to look up their own routing tables and then forward the bottom message to a corresponding communication link. When a bottom message is forwarded between bottom communication modules, if there is a routing record of a target bottom communication module in a routing table of a bottom communication module, then the message is forwarded normally, and a successful response is returned to an adjacent module sending the bottom message; otherwise, a failure response is returned to the adjacent module sending the bottom message. The bottom communication module receiving the failure response returns the failure response back to the last hop bottom communication module which forwards the bottom message. In this way, the first bottom communication module sending the bottom message can acquire that the bottom message is sent unsuccessfully.

When the bottom message is sent unsuccessfully, the bottom communication module as a message sending end may re-initiate a routing process, re-looks for a forwarding route of the bottom message, and promotes other bottom communication modules to update their own routing tables. For example, when the bottom communication module A as the first module sending the bottom message acquires that it sends a bottom message to the module B unsuccessfully, it will send all the bottom communication modules directly adjacent to itself a re-routing request message, which includes the number of route hops set by the module A itself. All the bottom communication modules receiving the re-routing request message first check whether they are the module B or not; if they are not the module B, then check whether the value of the number of the route hops in the re-routing request message is 0; if the value is not 0, then forward the checked re-routing request message to all the directly adjacent modules (except the module from which the message comes), write the unique identifier of the forwarding module itself during forwarding, and subtract 1 from the value of the number of hops, and if the value is 0, then discard the re-routing request message without processing; and if a bottom communication module determines it is the module B, then the bottom communication module sends a response message about successful routing to the last hop bottom communication module according to a routing process record in the re-routing request message, wherein the response message includes the unique identifiers of all the bottom communication modules which are passed orderly during transferring. All the bottom communication modules receiving the response message about successful routing update information of routing to the module B in their own routing tables according to path information recorded in the response message, then check whether they are the module A or not, if they are not, then send the response message about successful routing to the last hop bottom communication module, and if a bottom communication module thereof determines it is the module A, then the process is completely ended.

Based on the system shown in Fig. 1, Fig. 2 and Fig. 3 and the M2M platform architecture, when an M2M application sends a message to a bottom terminal, a target address is a network unique identifier of the bottom terminal. When the bottom terminal and the M2M application are registered on the same M2M platform, the M2M platform directly sends the message to the bottom terminal; when the bottom terminal and the M2M application are not registered on the same M2M platform, the M2M platform first check its own routing table, then routes the message to a target bottom terminal, where the routing crosses M2M-platforms.

When a bottom terminal sends a message to an M2M application, the bottom terminal first sends the message to an M2M platform to which the bottom terminal belongs, and the M2M platform finds out the M2M application corresponding to the bottom terminal in a subscription relationship stored by itself. If the M2M application is an application registered on the M2M platform, the message is directly forwarded to the M2M application; if the M2M application is an application registered on other M2M platform, the M2M platform first check its own routing table, then routes the message to a target M2M application.

When a bottom terminal sends a message to a bottom terminal, a target address is a network unique identifier of the bottom terminal. When the two bottom terminals are registered on the same M2M platform, the M2M platform directly sends the message to the target bottom terminal; when the two bottom terminals are not registered on the same M2M platform, the M2M platform first checks its own routing table, then routes the message to the target bottom terminal.

The processing flows performed by an M2M platform are similar when an M2M application communicates with a bottom terminal, or bottom terminals communicate with one another in the M2M platform communication system. The workflow of a bottom communication module is illustrated by taking the case that an M2M application sends a message to the bottom terminal as an example.

The message sent to the bottom terminal by the M2M application is first sent to the M2M platform, and a target address of the message is a network unique identifier of the bottom terminal; for the received message, the upper layer of the M2M platform first performs logic processing, including: processing information reported by the bottom terminal, requesting configuration of the bottom terminal, reading the configuration of the bottom terminal, sending a control command to the bottom terminal, and so on, then sends the message to any of the bottom communication modules for forwarding.

The bottom communication module extracts the identifier of the M2M platform on which the bottom terminal is registered from the global network unique identifier included in the received message, then finds out a forwarding path from its own routing table, and forwards the message to a corresponding link. Specifically, the bottom communication module receiving the message extracts the identifier of the M2M platform on which the bottom terminal is registered from the global network unique identifier included in the received message, and checks whether the extracted M2M platform identifier is matched with its own unique identifier (i.e., the identifier of the M2M platform to which the bottom communication module itself belongs) or not, if they are not matched, then continues looking up the routing table and forwards the message to the next bottom communication module in the forwarding path, and if they are matched, then extracts a bottom terminal type code, an identifier of a device group to which the bottom terminal registered on the M2M platform belongs, registration time and a serial number from the global network unique identifier included in the message. The M2M platform sends an M2M application message to all of the bottom terminals in the group corresponding to the identifier of the device group when both the registration time and the serial number extracted are default values (e.g., all are 0); and when the registration time and/or the serial number extracted have/has specific values (i.e., not the default values), the M2M platform matches the extracted registration time and/or the serial number with information of all the bottom terminal registered on the M2M platform in the registration information maintained by the M2M platform itself and sends the M2M application message to the bottom terminal matching with the registration information.

The above are only the preferred embodiments of the disclosure and not intended to limit the scope of protection of the disclosure.

## Claims

1. An M2M platform communication system, comprising a plurality of Machine-to-Machine, M2M, platforms on which bottom terminals are registered, wherein each of the M2M platforms comprises an upper application logic processing module and a bottom communication module, wherein,
the upper application logic processing module is configured to execute application logic processing of the M2M platform to obtain a bottom message which includes a global network unique identifier of a target bottom terminal; and
the bottom communication module is configured to route the bottom message to the target bottom terminal according to the global network unique identifier in the bottom message; further comprising that the each of the M2M platforms, when a bottom terminal requests to register, allocates a global network unique identifier to the bottom terminal;
the global network unique identifier comprises an identifier of an M2M platform on which the bottom terminal is registered;
accordingly, the bottom communication module of the each of the M2M platforms is further configured to extract the identifier of the M2M platform on which the bottom terminal is registered from the global network unique identifier, match the extracted identifier of the M2M platform with an identifier of an M2M platform to which the bottom communication module itself belongs, look up a routing and forwarding table of the bottom communication module itself according to the extracted identifier of the M2M platform when the match fails, and forward the bottom message according to a forwarding path searched out;
wherein the global network unique identifier further comprises a bottom terminal type code, an identifier of a device group to which the bottom terminal registered on the M2M platform belongs, registration time and a serial number;
accordingly, the bottom communication module of the each of the M2M platforms is further configured to, when the match succeeds, extract the bottom terminal type code, the identifier of the device group to which the bottom terminal registered on the M2M platform belongs, the registration time and the serial number from the global network unique identifier; when both the registration time and the serial number extracted are default values, send the bottom message to all bottom terminals in the group corresponding to the identifier of the device group; when the registration time and/or the serial number extracted are/ is not default values, match the registration time and/or the serial number extracted with registration information maintained by the M2M platform to which the bottom communication module itself belongs, and send the bottom message to a bottom terminal matching with the registration information.

2. The M2M platform communication system according to claim 1, further comprising: an operator management and configuration platform, which is connected to the each of the M2M platforms, and configured to configure and maintain a routing table of the bottom communication module of the each of the M2M platforms.

3. The M2M platform communication system according to claim 1, wherein the bottom communication module of the each of the M2M platforms is further configured to realize maintenance of its own routing table through routing information interaction with an adjacent bottom communication module.

4. Machine-to-Machine, M2M, platform communication method, comprising:
executing, by an upper application logic processing module, application logic processing of an M2M platform to obtain a bottom message which includes a global network unique identifier of a target bottom terminal; and
routing, by a bottom communication module, the bottom message to the target bottom terminal according to the global network unique identifier in the bottom message; wherein the method further comprises: allocating, by the M2M platform, a global network unique identifier to a bottom terminal when the bottom terminal requests to register;
wherein the global network unique identifier comprises an identifier of the M2M platform on which the bottom terminal is registered;
accordingly, the method further comprising: extracting, by the bottom communication module, the identifier of the M2M platform on which the bottom terminal is registered from the global network unique identifier, and matching, by the bottom communication module, the extracted identifier of the M2M platform with an identifier of an M2M platform to which the bottom communication module itself belongs; when the match fails, looking up, by the bottom communication module, a routing and forwarding table of the bottom communication module itself according to the extracted identifier of the M2M platform, and forwarding, by the bottom communication module, the bottom message according to a forwarding path searched out;
wherein the global network unique identifier further comprises a bottom terminal type code, an identifier of a device group to which the bottom terminal registered on the M2M platform belongs, registration time and a serial number;
accordingly, the method further comprising: when the match succeeds, extracting, by the bottom communication module, the bottom terminal type code, the identifier of the device group to which the bottom terminal registered on the M2M platform belongs, the registration time and the serial number from the global network unique identifier; when both the registration time and the serial number extracted are default values, sending, by the bottom communication module, the bottom message to all bottom terminals in the group corresponding to the identifier of the device group; when the registration time and/or the serial number extracted are/is not default values, matching, by the bottom communication module, the registration time and/or the serial number extracted with registration information maintained by the M2M platform to which the bottom communication module itself belongs and sending, by the bottom communication module, the bottom message to a bottom terminal matching with the registration information.

5. The M2M platform communication method according to claim 4, further comprising: configuring and maintaining, by an operator management and configuration platform, a routing table of the bottom communication module of each M2M platform.

6. The M2M platform communication method according to claim 4, further comprising: realizing, by the bottom communication module of each M2M platform, maintenance of its own routing table through routing information interaction with an adjacent bottom communication module.

## Patentansprüche

1. M2M-Plattform-Kommunikationssystem, mehrere Maschine-zu-Maschine-(Machine-to-Machine-, M2M-)Plattformen umfassend, auf denen nachgeordnete Geräte registriert sind, wobei jede der M2M-Plattformen ein übergeordnetes Anwendungslogik-Verarbeitungsmodul und ein untergeordnetes Kommunikationsmodul umfasst, wobei
das übergeordnete Anwendungslogik-Verarbeitungsmodul dafür konfiguriert ist, eine Anwendungslogikverarbeitung der M2M-Plattform auszuführen, um eine untergeordnete Nachricht zu erhalten, die eine global eindeutige Kennung (Globally Unique Identifier) eines untergeordneten Zielgerät enthält, und
das untergeordnete Kommunikationsmodul dafür konfiguriert ist, die untergeordnete Nachricht gemäß der global eindeutigen Kennung in der untergeordneten Nachricht zu dem untergeordneten Zielgerät zu leiten,
ferner umfassend, dass jede der M2M-Plattformen, wenn ein untergeordnetes Gerät eine Registrierung anfragt, dem untergeordneten Gerät eine global eindeutige Kennung zuweist,
die global eindeutige Kennung eine Kennung einer M2M-Plattform umfasst, auf der das untergeordnete Gerät registriert ist,
dementsprechend das untergeordnete Kommunikationsmodul jeder der M2M-Plattformen ferner dafür konfiguriert ist, die Kennung der M2M-Plattform, auf der das untergeordnete Gerät registriert ist, aus der global eindeutigen Kennung zu extrahieren, die extrahierte Kennung der M2M-Plattform mit einer Kennung einer M2M-Plattform abzugleichen, zu der das untergeordnete Kommunikationsmodul selbst gehört, eine Routing- und Weiterleitungstabelle des untergeordneten Kommunikationsmoduls selbst gemäß der extrahierten Kennung der M2M-Plattform nachzuschlagen, wenn der Abgleich fehlschlägt, und die untergeordnete Nachricht gemäß einem herausgesuchten Weiterleitungspfad weiterzuleiten,
wobei die global eindeutige Kennung ferner einen Code für den Typ des untergeordneten Geräts, eine Kennung einer Gerätegruppe, zu der das untergeordnete Gerät, das auf der M2M-Plattform registriert ist, gehört, Registrierungszeit und Seriennummer umfasst,
dementsprechend das untergeordnete Kommunikationsmodul jeder der M2M-Plattformen ferner dafür konfiguriert ist, wenn der Abgleich erfolgreich ist, den Code für den Typ des untergeordneten Geräts, die Kennung der Gerätegruppe, zu der das untergeordnete Gerät, das auf der M2M-Plattform registriert ist, gehört, die Registrierungszeit und die Seriennummer aus der global eindeutigen Kennung zu extrahieren, die untergeordnete Nachricht an alle untergeordneten Geräte in der der Kennung der Gerätegruppe entsprechenden Gruppe zu senden, wenn sowohl die extrahierte Registrierungszeit als auch die extrahierte Seriennummer Standardwerte sind, die extrahierte Registrierungszeit und/oder die extrahierte Seriennummer mit Registrierungsinformationen abzugleichen, die von der M2M-Plattform gepflegt werden, zu der das untergeordnete Kommunikationsmodul gehört, und die untergeordnete Nachricht an ein untergeordnetes Gerät, das mit den Registrierungsinformationen übereinstimmt, zu senden, wenn die extrahierte Registrierungszeit und/oder extrahierte Seriennummer kein(e) Standardwert(e) ist/sind.

2. M2M-Plattform-Kommunikationssystem nach Anspruch 1, ferner umfassend: eine Betreiber-Verwaltungs- und -Konfigurationsplattform, die mit jeder der M2M-Plattformen verbunden und dafür konfiguriert ist, eine Routing-Tabelle des untergeordnetes Kommunikationsmoduls jeder der M2M-Plattformen zu konfigurieren und zu pflegen.

3. M2M-Plattform-Kommunikationssystem nach Anspruch 1, wobei das untergeordnete Kommunikationsmodul jeder der M2M-Plattformen ferner dafür konfiguriert ist, die Pflege seiner eigenen Routing-Tabelle durch Routing-Informationsinteraktionen mit einem benachbarten untergeordneten Kommunikationsmodul zu realisieren.

4. Maschine-zu-Maschine-(Machine-to-Machine-, M2M-)Plattform-Kommunikationsverfahren, umfassend:
Ausführen einer Anwendungslogikverarbeitung einer M2M-Plattform durch ein übergeordnetes Anwendungslogik-Verarbeitungsmodul, um eine untergeordnete Nachricht zu erhalten, die eine global eindeutige Kennung (Globally Unique Identifier) eines untergeordneten Zielgeräts enthält, und
Routen der untergeordneten Nachricht zu dem untergeordneten Zielgerät gemäß der global eindeutigen Kennung in der untergeordneten Nachricht durch ein untergeordnetes Kommunikationsmodul,
wobei das Verfahren ferner umfasst: Zuweisen einer global eindeutigen Kennung zu einem untergeordneten Gerät durch die M2M-Plattform, wenn das untergeordnete Gerät eine Registrierung anfragt,
wobei die global eindeutige Kennung eine Kennung der M2M-Plattform umfasst, auf der das untergeordnete Gerät registriert ist,
wobei das Verfahren dementsprechend ferner umfasst: Extrahieren der Kennung der M2M-Plattform, auf der das untergeordnete Gerät registriert ist, aus der global eindeutigen Kennung durch das untergeordnete Kommunikationsmodul und Abgleichen der extrahierten Kennung der M2M-Plattform mit einer Kennung einer M2M-Plattform, zu der das untergeordnete Kommunikationsmodul selbst gehört, durch das untergeordnete Kommunikationsmodul, Nachschlagen einer Routing- und Weiterleitungstabelle des untergeordneten Kommunikationsmoduls selbst gemäß der extrahierten Kennung der M2M-Plattform durch das untergeordnete Kommunikationsmodul, wenn der Abgleich fehlschlägt, und Weiterleiten der untergeordneten Nachricht gemäß einem herausgesuchten Weiterleitungspfad durch das untergeordnete Kommunikationsmodul,
wobei die global eindeutige Kennung ferner einen Code für den Typ des untergeordneten Geräts, eine Kennung einer Gerätegruppe, zu der das untergeordnete Gerät, das auf der M2M-Plattform registriert ist, gehört, Registrierungszeit und eine Seriennummer umfasst,
wobei das Verfahren dementsprechend umfasst: wenn der Abgleich erfolgreich ist, Extrahieren des Codes für den Typ des untergeordneten Geräts, der Kennung der Gerätegruppe, zu der das untergeordnete Gerät, das auf der M2M-Plattform registriert ist, gehört, der Registrierungszeit und der Seriennummer aus der global eindeutigen Kennung durch das untergeordnete Kommunikationsmodul, Senden der untergeordneten Nachricht an alle untergeordneten Geräte in der der Kennung der Gerätegruppe entsprechenden Gruppe durch das untergeordnete Kommunikationsmodul, wenn sowohl die extrahierte Registrierungszeit als auch die extrahierte Seriennummer Standardwerte sind, Abgleichen der extrahierten Registrierungszeit und/oder der extrahierten Seriennummer mit Registrierungsinformationen, die von der M2M-Plattform gepflegt werden, zu der das untergeordnete Kommunikationsmodul selbst gehört, durch das untergeordnete Kommunikationsmodul und Senden der untergeordneten Nachricht an ein untergeordnetes Gerät, das mit den Registrierungsinformationen übereinstimmt, durch das untergeordnete Kommunikationsmodul, wenn die extrahierte Registrierungszeit und/oder extrahierte Seriennummer kein(e) Standardwert(e) ist/sind.

5. M2M-Plattform-Kommunikationsverfahren nach Anspruch 4, ferner umfassend: Konfigurieren und Pflegen einer Routing-Tabelle des untergeordneten Kommunikationsmoduls jeder M2M-Plattform durch eine Betreiber-Verwaltungs- und - Konfigurationsplattform.

6. M2M-Plattform-Kommunikationsverfahren nach Anspruch 4, ferner umfassend: Realisieren der Pflege der eigenen Routing-Tabelle durch das untergeordnete Kommunikationsmodul jeder M2M-Plattform durch Routing-Informationsinteraktionen mit einem benachbarten untergeordneten Kommunikationsmodul.

## Revendications

1. Système de communication de plateformes M2M, comprenant une pluralité de plateformes de communication entre machines, M2M, sur lesquelles des terminaux inférieurs sont enregistrés, dans lequel chacune des plateformes de communication M2M comprend un module de traitement logique d'application supérieur et un module de communication inférieur, dans lequel,
le module de traitement logique d'application supérieur est configuré de manière à exécuter un traitement logique d'application de la plateforme de communication M2M en vue d'obtenir un message inférieur qui inclut un identifiant unique de réseau mondial d'un terminal inférieur cible ; et
le module de communication inférieur est configuré de manière à router le message inférieur vers le terminal inférieur cible selon l'identifiant unique de réseau mondial dans le message inférieur ;
dans lequel en outre ladite chacune des plateformes de communication M2M, lorsqu'un terminal inférieur demande à s'enregistrer, affecte un identifiant unique de réseau mondial au terminal inférieur ;
l'identifiant unique de réseau mondial comprend un identifiant d'une plateforme de communication M2M sur laquelle est enregistré le terminal inférieur ;
en conséquence, le module de communication inférieur de ladite chacune des plateformes de communication M2M est en outre configuré de manière à extraire l'identifiant de la plateforme de communication M2M sur laquelle est enregistré le terminal inférieur, de l'identifiant unique de réseau mondial, à mettre en correspondance l'identifiant extrait de la plateforme de communication M2M avec un identifiant d'une plateforme de communication M2M à laquelle le module de communication inférieur lui-même appartient, à consulter une table de routage et d'acheminement du module de communication inférieur lui-même selon l'identifiant extrait de la plateforme de communication M2M lorsque la correspondance échoue, et à acheminer le message inférieur selon un trajet d'acheminement recherché ;
dans lequel l'identifiant unique de réseau mondial comprend en outre un code de type de terminal inférieur, un identifiant d'un groupe de dispositifs auquel appartient le terminal inférieur enregistré sur la plateforme de communication M2M, une heure d'enregistrement et un numéro de série ;
en conséquence, le module de communication inférieur de ladite chacune des plateformes de communication M2M est en outre configuré de manière à, lorsque la correspondance réussit, extraire le code de type de terminal inférieur, l'identifiant du groupe de dispositifs auquel appartient le terminal inférieur enregistré sur la plateforme de communication M2M, l'heure d'enregistrement et le numéro de série, de l'identifiant unique de réseau mondial ; lorsque, à la fois, l'heure d'enregistrement et le numéro de série extraits sont des valeurs par défaut, envoyer le message inférieur à tous les terminaux inférieurs dans le groupe correspondant à l'identifiant du groupe de dispositifs ; lorsque l'heure d'enregistrement et/ou le numéro de série extraits n'est ou ne sont pas des valeurs par défaut, mettre en correspondance l'heure d'enregistrement et/ou le numéro de série extraits avec des informations d'enregistrement maintenues par la plateforme de communication M2M à laquelle appartient le module de communication inférieur lui-même, et envoyer le message inférieur à un terminal inférieur en correspondance avec les informations d'enregistrement.

2. Système de communication de plateformes M2M selon la revendication 1, comprenant en outre : une plateforme de gestion et de configuration d'opérateur, laquelle est connectée à ladite chacune des plateformes de communication M2M, et est configurée de manière à configurer et maintenir une table de routage du module de communication inférieur de ladite chacune des plateformes de communication M2M.

3. Système de communication de plateformes M2M selon la revendication 1, dans lequel le module de communication inférieur de ladite chacune des plateformes de communication M2M est en outre configuré de manière à réaliser la maintenance de sa propre table de routage à travers une interaction d'informations de routage avec un module de communication inférieur adjacent.

4. Procédé de communication de plateformes de communication entre machines, M2M, comprenant les étapes ci-dessous consistant à :
exécuter, par le biais d'un module de traitement logique d'application supérieur, un traitement logique d'application d'une plateforme de communication M2M, pour obtenir un message inférieur qui inclut un identifiant unique de réseau mondial d'un terminal inférieur cible ; et
router, par le biais d'un module de communication inférieur, le message inférieur vers le terminal inférieur cible selon l'identifiant unique de réseau mondial dans le message inférieur ;
dans lequel le procédé comporte en outre l'étape consistant à : affecter, par le biais de la plateforme de communication M2M, un identifiant unique de réseau mondial, à un terminal inférieur, lorsque le terminal inférieur demande à s'enregistrer ;
dans lequel l'identifiant unique de réseau mondial comprend un identifiant de la plateforme de communication M2M sur laquelle est enregistré le terminal inférieur ;
en conséquence, le procédé comporte en outre les étapes consistant à : extraire, par le biais du module de communication inférieur, l'identifiant de la plateforme de communication M2M sur laquelle est enregistré le terminal inférieur, de l'identifiant unique de réseau mondial, et mettre en correspondance, par le biais du module de communication inférieur, l'identifiant extrait de la plateforme de communication M2M avec un identifiant d'une plateforme de communication M2M à laquelle le module de communication inférieur lui-même appartient ; lorsque la correspondance échoue, consulter, par le biais du module de communication inférieur, une table de routage et d'acheminement du module de communication inférieur lui-même selon l'identifiant extrait de la plateforme de communication M2M, et acheminer, par le biais du module de communication inférieur, le message inférieur, selon un trajet d'acheminement recherché ;
dans lequel l'identifiant unique de réseau mondial comprend en outre un code de type de terminal inférieur, un identifiant d'un groupe de dispositifs auquel appartient le terminal inférieur enregistré sur la plateforme de communication M2M, une heure d'enregistrement et un numéro de série ;
en conséquence, le procédé comprend en outre les étapes consistant à : lorsque la correspondance réussit, extraire, par le biais du module de communication inférieur, le code de type de terminal inférieur, l'identifiant du groupe de dispositifs auquel appartient le terminal inférieur enregistré sur la plateforme de communication M2M, l'heure d'enregistrement et le numéro de série, de l'identifiant unique de réseau mondial ; lorsque, à la fois, l'heure d'enregistrement et le numéro de série extraits sont des valeurs par défaut, envoyer, par le biais du module de communication inférieur, le message inférieur à tous les terminaux inférieurs dans le groupe correspondant à l'identifiant du groupe de dispositifs ; lorsque l'heure d'enregistrement et/ou le numéro de série extraits n'est ou ne sont pas des valeurs par défaut, mettre en correspondance, par le biais du module de communication inférieur, l'heure d'enregistrement et/ou le numéro de série extraits avec des informations d'enregistrement maintenues par la plateforme de communication M2M à laquelle appartient le module de communication inférieur lui-même, et envoyer, par le biais du module de communication inférieur, le message inférieur à un terminal inférieur en correspondance avec les informations d'enregistrement.

5. Procédé de communication de plateformes M2M selon la revendication 4, comprenant en outre les étapes consistant à : configurer et maintenir, par le biais d'une plateforme de gestion et de configuration d'opérateur, une table de routage du module de communication inférieur de chaque plateforme de communication M2M.

6. Procédé de communication de plateformes M2M selon la revendication 4, comprenant en outre l'étape consistant à : réaliser, par le biais du module de communication inférieur de chaque plateforme de communication M2M, la maintenance de sa propre table de routage, à travers une interaction d'informations de routage, avec un module de communication inférieur adjacent.
